# EUROPÄISCHE PATENTSCHRIFT

(11) **EP 0 760 297 B1**
(45) Veröffentlichungstag und Bekanntmachung des Hinweises auf die Patenterteilung: **01.12.1999**
(21) Anmeldenummer: 96112586.1
(22) Anmeldetag: 03.08.1996
(51) Int. Cl.: B60C 13/00, G09F 3/02, B32B 25/08

(54) **Verwendung von Etiketten zur Kennzeichnung von Gummiteilen, insbesondere Reifen**
Use of labels for marking rubber parts, in particular tyres
Utilisation d'étiquettes pour l'identification de pièces en caoutchouc, notamment bandages pneumatiques

(30) Priorität: 25.08.1995 DE 19531332
(43) Veröffentlichungstag der Anmeldung: 05.03.1997
(73) Patentinhaber: Beiersdorf Aktiengesellschaft, 20245 Hamburg (DE)
(72) Erfinder: Koops, Arne, 22083 Hamburg (DE); Külper, Klaus, Dr., 25421 Pinneberg (DE); Ofer, Ulrich, 23560 Lübeck (DE); Kreft, Christian, 21077 Hamburg (DE)

(56) Entgegenhaltungen:
- EP-A- 0 190 997
- EP-A- 0 650 824
- EP-A- 0 689 948
- EP-A- 0 706 897
- DE-A- 4 446 874
- DE-C- 4 027 192

## Beschreibung

Die Erfindung betrifft die Verwendung von Etiketten zur Kennzeichnung von Gummiteilen, insbesondere Reifen, deren Trägerschicht aus einer mittels Laser, insbesondere eines Festkörper- oder CO₂-Lasers, beschriftbaren mitvulkanisierbaren, hellen Gummimischung besteht. Der gewünschte Kontrast zwischen Basismaterial und Schrift wird dabei durch Farbumschlag ohne oder mit minimalem Materialabtrag erzeugt.

Die Beschriftung und Kennzeichnung von Materialien mit Hilfe von Lasern ist ein weit verbreitetes Verfahren. Während des Beschriftungsvorganges wird dabei Material von dem zu beschrifteten Material abgetragen. Wird eine dünne, andersfarbige Deckschicht von einer Basisschicht abgetragen, lassen sich kontrastreiche Beschriftungen erzielen. Derartige laserbeschriftbare Materialien zeichnen sich durch einen zwei- oder mehrschichtigen Aufbau aus dünnen Deckschichten und dickeren Basisschichten aus, wobei die einzelnen Farbschichten maximale Kontraste aufweisen sollen. Ein Einsatzgebiet dieser Materialien findet man insbesondere bei der Herstellung von Etiketten, Schildern und Armaturen.

In der deutschen Patentschrift DE 29 36 926 wird ein Verfahren zum Herstellen von mit verschiedenen Zeichen versehenen gleichartigen Kunststoffteilen unter Benutzung von energiereicher Strahlung offenbart. Dazu wird dem Kunststoff des Grundmaterials ein sich bei Einwirkung von Energiestrahlung verfärbbarer Füllstoff beigemischt. Die Oberfläche der Standardteile wird anschließend der Energiestrahlung ausgesetzt. Durch das entsprechende Einwirken der Strahlung auf das Füllmittel, zum Beispiel ein handelsübliches, auf Wärmestrahlung ansprechendes Farbpulver, kommt es zu einem dauerhaften Farbumschlag. Der Füllstoff selbst ist in diesem Fall für den gewünschten Farbumschlag verantwortlich, weil er unter der Energieeinstrahlung einer photochemischen Reaktion unterliegt, die zumeist zu einer Zersetzung des Füllstoffes führt.
Damit ergeben sich für den Fall, daß das Verfahren zur Kennzeichnung von in der Regel schwarzen Gummiteilen mit Etiketten bestehend aus Kunststoffen auf Kautschukbasis angewendet wird, wenig kontrastreiche Beschriftungen. Außerdem ist das Zumischen von derartigen Farbstoffen in den Kautschuk eher unerwünscht.

In der deutschen Patentschrift DE 30 44 722 wird vorgeschlagen, als Füllstoffe Ruß oder Graphit zu verwenden. Die Füllstoffe Ruß oder Graphit erzeugen eine dunkle, zumeist schwarze Verfärbung des eingesetzten Kunststoffes. Wenn nun Etiketten, die aus einer Mischung aus Kunststoff mit den erwähnten Zuschlagsstoffen bestehen, mittels eines Lasers beschriftet werden, läßt sich ebenfalls nur eine sehr wenig kontrastreiche Beschriftung erzielen, die ein sicheres und schnelles Ablesen des oder der geschriebenen Zeichen nicht gewährleistet. Speziell beim Einsatz der genannten Füllstoffe in üblicherweise schwarz eingefärbten Gummimischungen liegt auf der Hand, daß die erzeugte Beschriftung nur einen äußerst geringen Kontrast aufweist.
Ferner wird das Material bei der Belaserung mehr oder weniger stark an der Oberfläche verletzt, weil die Ruß- oder Graphitpartikel die Strahlung bevorzugt absorbieren, so daß eine Zerstörung der Oberflächenstruktur der Kunststoffteile auftritt. Dies verschlechtert zumindest den optischen Eindruck, zusätzlich stellt es aber auch potentielle Angriffspunkte für nachfolgende Materialzerstörung dar.

In der Europäischen Patenanmeldung EP 0 190 997 wird ein Verfahren zur Beschriftung von hochmolekularem, organischem Material offenbart, das mindestens einen strahlungsempfindlichen, eine Verfärbung verursachenden Zusatzstoff enthält. Der Zusatzstoff besteht aus mindestens einem anorganischen und/oder organischen Pigment und/oder einem polymerlöslichen Farbstoff. Zur Kennzeichnung wird ein Laser mit einer Strahlung verwendet, deren Wellenlänge im nahen UV-, im nahen IR- oder im sichtbaren Bereich liegt.
Für das hochmolekulare organische Material wird unter anderem auch die Verwendung von Kautschuk vorgeschlagen. Die offenbarten Zusatzstoffe und Farbpigmente können in Standardgummimischungen, die in der Regel schwarz gefärbt sind, aber nicht oder nur in eingeschränkt genutzt werden. Es ergeben sich durch die aufgrund des Farbumschlags erzeugte dunkle Schrift auf schwarzem Untergrund lediglich wenig kontrastreiche und teilweise nur temporär lesbare Beschriftungen, die für eine praktische Anwendung wie die dauerhafte Kennzeichnung und Lesbarkeit nicht ausreichend sind.
Die Verfärbung durch Laserbestrahlung wird durch eine photochemische Reaktion des Zusatzstoffes und Farbpigments, also eine Veränderung desselben, hervorgerufen. Eine Zerstörung oder Veränderung des eigentlichen Kunststoffes durch den Laser tritt nicht auf. Dies bestätigt auch der Anmelder, wie in dem Erteilungs-und Einspruchsverfahren zu der Anmeldung deutlich gemacht wird.

Die deutsche Patentanmeldung DE 39 17 294 offenbart die Herstellung von Formmassen, Halbzeugen und Fertigteilen, die aus hochpolymerem Material bestehen, das mittels Laserlicht markier- und/oder beschriftbar ist. Das Material enthält unter anderem einen Zusatzstoff, der im sichtbaren Spektralbereich keine oder nur eine schwache Eigenfarbe hat und der unter Einwirkung von Laserlicht, dessen Wellenlänge außerhalb des sichtbaren Bereiches liegt, im sichtbaren Spektralbereich eine Markierung mit großem Farbkontrast ergibt.
Als geeignete Zusatzstoffe werden Kupferhydroxidphosphat, Molybdän(VI)-Oxid und Titandioxid als die Verfärbung hervorrufende Zusatzstoffe genannt.
Die beschriebenen laserbeschriftbaren hochpolymeren Materialien sind jedoch für den Einsatz als Etiketten für Gummi- oder Kautschukartikel ungeeignet, weil sie als Fremdkörper wirken und eine bestimmungsgemäßen Gebrauch der Gummiartikel stark einschränken.

Die Beschriftung oder Kennzeichnung von technischen Gummiteilen, die zum überwiegenden Teil aus Kautschuk bestehen wie zum Beispiel Reifen, Formteilen, Schwingungsdämpfern oder Profilen, ist mit den bisher bekannten Techniken nur sehr eingeschränkt möglich. Üblicherweise müssen auf derartige Teile Etiketten der bekannten Art aufgeklebt werden, wenn eine eindeutige Kennzeichnung des betreffenden Stücks erfolgen soll. Dabei ergibt sich das Problem der unzureichenden Haftung des Etiketts, besonders wenn das Teil während seines Einsatzes hohen Belastungen ausgesetzt ist, zum Beispiel bei Reifen an einem Personenkraftwagen. Eine lebenslange Kennzeichnung des entsprechenden Gummiteils ist somit nicht gewährbar. Auch ist insbesondere eine durchgehende Kennzeichnung vor, während und nach dem Vulkanisationsprozeß des Gummiteils mittels eines bekannten Etiketts nicht möglich.
Darüber hinaus weisen die heute bekannten zwei- oder mehrschichtigen laserbeschriftbaren Etiketten weitere Nachteile auf, die ihren Gebrauch zur Kennzeichnung von technischen Gummiteilen zusätzlich einschränken. So stellt, insbesondere die Interlaminathaftung zwischen den nacheinander aufgetragenen Schichten einen Schwachpunkt dar, der nur durch spezielle Herstellungstechniken und/oder Additiven in den Rezepturen so zu verbessern ist, daß eine ausreichende Verbundfestigkeit den Einsatz des Etiketts für hochwertige Anforderungen zuläßt.

Aufgabe der Erfindung war es, hier Abhilfe zu schaffen, insbesondere die Kennzeichnung von Gummiteilen mit Hilfe eines Etiketts aus einer laserbeschriftbaren mitvulkanisierbaren, hellen Gummimischung so zu verbessern, daß die Nachteile des Stands der Technik nicht oder zumindest nicht in dem Maße auftreten.

Zur Lösung dieser Aufgabe schlägt die Erfindung die Verwendung von Etiketten mit einer Trägerschicht aus einer laserbeschriftbaren mitvulkanisierbaren, hellen Gummimischung vor, die ein Additiv enthält, das unter Laserbestrahlung einen Farbumschlag erzeugt, wie sie in den Ansprüchen näher gekennzeichnet ist.

Diese Etiketten sind durch eine Trägerschicht aus einer Gummimischung gekennzeichnet, die neben der Beschriftbarkeit durch einen Laser die Eigenschaften aufweist, daß sie selbst vulkanisierbar ist und insbesondere zusammen mit dem zu kennzeichnenden Gummiteil mitvulkanisierbar ist sowie daß sie eine helle Farbe besitzt. Darüber hinaus enthält die Trägerschicht ein Additiv, das unter Laserbestrahlung einen Farbumschlag erzeugt.
Die Trägerschicht kann gegebenenfalls einseitig mit einer Selbstklebemasse, insbesondere einer vulkanisierbaren Kautschukklebemasse, beschichtet sein, die ihrerseits gegebenenfalls mit einem Trennpapier oder einer Trennfolie abgedeckt ist. Die Trägerschicht kann eine transparente Schutzabdeckung, bevorzugt aus Polyester, Polyamid, perfluorierten Polymeren oder Polyimid, aufweisen, wenn die Folie zum Schutz gegen eventuelle Verschmutzungen der Trägerschicht den Vulkanisationsvorgang des Etiketts mit dem entsprechenden Gummiteil ebenfalls durchläuft. Je nach Einsatzzweck des Etiketts ist eine anschließende Entfernung der Schutzfolie möglich.

Insbesondere um nach dem Vulkanisationsprozeß, in dem zwischen Etikett und zu kennzeichnenden Gummiteil eine unlösbare Verbindung hergestellt wird, eine Diffusion von Weichmachern oder ähnlichen Bestandteilen der Gummimischung aus dem Gummiteil in das Etikett zu verhindern, kann das Etikett mit Ausnahme der Seite, die durch die Einwirkung von Laserstrahlung zu beschriften ist, vorzugsweise allseitig mit einer Sperrschicht versehen sein. Diese Sperrschicht besteht insbesondere aus Polyamid oder aus einer aufgedampften Metallschicht, bevorzugt Aluminium. Weitere Ausführungsformen dieser Sperrschichten stellen aus der Folienindustrie bekannte dünne Schichten wie SiOₓ-Sperrschichten oder Polyvinylidenchlorid (PVDC)-Filme dar.

Als Basismaterial für diese Gummimischung wird ein Kautschuk, bevorzugt ein Blend aus Synthesekautschuken wie beispielsweise SBR-, Butyl- oder EPDM-Kautschuk eingesetzt. Daneben ist aber auch die Verwendung Naturkautschuk, gegebenenfalls auch in einem Blend mit Synthesekautschuk, oder einem reinen Synthesekautschuk möglich. Diesem Kautschuk bzw. Kautschukgemisch ist ein Additiv zugesetzt, das unter Laserbestrahlung einen Farbumschlag erzeugt. Der Kautschuk kann darüber hinaus mit üblichen Zusatzstoffen wie Alterungsschutzmitteln, Vernetzern, Lichtschutzmitteln, Ozonschutzmitteln, Zinkoxid, Fettsäuren, Harzen, Weichmachern oder Beschleunigern abgemischt sein.

Geeignete Additive zur Erzeugung des Farbumschlags sind insbesondere Farbpigmente und Metallsalze, vor allem Kupferhydroxidphosphat, wie es in der deutschen Offenlegungschrift DE 39 17 294 beschrieben ist, oder auch gecoatete Perlglanzpigmente wie Iriodin ®. Diese Additive werden dem Kautschuk in einer Größenordnung von 0,1 bis 10 Gew.-%, insbesondere 0,5 bis 5 Gew.-%, zugesetzt.

Um dem Etikett eine gewisse Formstabilität zu verleihen, kann eine Vorvernetzung der Trägerschicht durch UV-Strahlung, Elektronenstrahlhärtung, auf thermischem oder chemischem Wege durchgeführt werden. Alternativ oder zusätzlich kann in der Trägerschicht ein Gewebe eingearbeitet sein.

Das eigentliche Etikett ohne Schutzfolie, Trennpapier und Selbstklebemasse kann eine Dicke von 10 bis 2500 µm, insbesondere 100 bis 1000 µm, aufweisen.

Die Vorteile der Verwendung von Etiketten aus der offenbarten Gummimischung sind darin zu sehen, daß es nun möglich ist, mit Hilfe von Etiketten technische Gummiteile wie Reifen, Formteile, Schwingungsdämpfer oder Profile dauerhaft mit sehr gutem Kontrast, der aus der Differenz zwischen der dunklen Beschriftung und der ansonsten hellen Gummimischung resultiert, mit unter anderem Buchstaben, Zahlen, Logos, Barcodes oder ID-Matrix-Codes zu beschriften oder zu kennzeichnen. Die gewählte Beschriftung kann von einem Betrachter ohne weitere Hilfsmittel lesbar sein, aber auch maschinell, zum Beispiel mit einem Scanner. Die Etiketten können sowohl vor der Vulkanisation als auch nach der Vulkanisation des Gummiteils an demselben angebracht werden. Die hohe Abriebfestigkeit des Materials sichert eine lebenslange Kennzeichnung.

Darüber hinaus besitzt die Kennzeichnung von Gummiteilen durch Etiketten, die direkt im Material fest eingebunden sind, gegenüber der mit bisher bekannten Etiketten den Vorteil, daß der Verlust wertvoller Informationen durch unbeabsichtigtes Lösen oder vorsätzliches Entfernen des Etiketts nicht auftreten kann.

Eine besonders vorteilhafte Verwendung der erfindungsgemäßen Etiketten bietet sich in der Herstellung von Reifen an.

Die Entwicklung in der Reifenindustrie geht dahin, daß jeder Reifen eine bevorzugte Laufrichtung aufweist, so daß der Reifen nicht mehr, wie heute noch üblich, beliebig am Fahrzeug plaziert werden kann. Durch den Produktionsprozeß des Reifens wird festgelegt, auf welcher Fahrzeugseite dieser eingesetzt werden muß. Dies erfordert eine eindeutige Kennzeichnung jedes Reifens, damit ein fehlerhaftes Montieren später ausgeschlossen ist.
Eine eindeutige, für einen Betrachter sehr leicht lesbare und/oder eine maschinell lesbare Kennzeichnung ist mit Hilfe der erfindungsgemäßen Etiketten möglich.

In der Reifenherstellung wird das gegebenenfalls bereits beschriftete Etikett, das überwiegend aus dem gleichen Material wie der Rohreifen besteht, vor dem Vulkanisationsprozeß auf dem Rohreifen aufgeklebt oder in der Vulkanisationsform aufgebracht.
Bei der vorteilhaften Ausführung des Etiketts mit einer selbstklebenden Beschichtung ist eine sehr sichere Plazierung des Etiketts auf der gewünschten Stelle des Rohreifens möglich, sofern die Eigenklebrigkeit des Rohreifens und des Etiketts für eine sichere Fixierung nicht ausreicht. Ein unerwünschtes Verrutschen des Etiketts ist somit ausgeschlossen. Ein eventuell vorhandenes Trennpapier oder eine Trennfolie wird zuvor von der Klebebeschichtung abgezogen.

Anschließend wird das Etikett zusammen mit dem Reifen, der zu diesem Zeitpunkt noch aus unvernetztem Rohkautschuk besteht, in der Vulkanisationsform vulkanisiert. Dadurch ergibt sich eine unlösbare Verbindung zwischen Etikett und Reifen und somit eine lebenslange Kennzeichnung des Reifens, insbesondere wenn die vorgesehene Klebebeschichtung aus einer ebenfalls vulkanisierbaren Kautschukklebemasse besteht.

Da das Etikett fast die gleichen homogenen Materialeigenschaften und damit sogar die gleichen chemischen und mechanischen Eigenschaften aufweist wie das Material des Reifens, tritt bei Reifen keine Reduzierung der Laufleistung durch eventuelles vorzeitiges Lösen des Etiketts aus dem übrigen Verbund auf, weil an der Grenzfläche zwischen Etikett und Gummiteil keine Eigenschaftssprünge und damit potentielle Schwachstellen anzutreffen sind.

Nach dem Vulkanisationsprozeß wird der fertige Reifen einer entsprechenden Vorrichtung zugeführt, indem die individuell gewünschte Beschriftung des Etiketts mit einem Laser erfolgt. So können zum Beispiel die Chargennummer und die jeweilige Bezeichnung des Reifens aufgebracht werden.

Die Beschriftung der erfindungsgemäßen Etiketten aus der Gummimischung kann mit Hilfe von Nd-YAG-Festkörperlasern, insbesondere bei einer Wellenlänge von 1064 nm, und CO₂-Lasern erfolgen. Ebenso ist aber auch eine Beschriftung mit DPY-Lasern oder mit Laserdioden möglich, die bei Wellenlängen von 700 bis 2000 nm emittieren.

Prinzipiell ist aber auch die Beschriftung aber auch vor dem Aufbringen des Etiketts auf dem Reifenrohling möglich.

Im Auftreffpunkt des Lasers auf die Materialoberfläche absorbiert das jeweilige Additiv wie beispielsweise Kupferhydroxidphosphat die Energie. Dies führt zu einer starken Wärmeentwicklung in der unmittelbaren Umgebung des bestrahlten Partikels durch Absorption der energiereichen Strahlung, so daß eine Karbonisierung der benachbarten Polymermatrix auftritt. Die hauptsächlich durch das Zumischen von Titandioxid hell gefärbte Gummimischung des Etiketts verändert ihre Farbe im Bereich der aufgetretenen Karbonisierung, abhängig von der eingestrahlten Energiemenge, zu Grau- bis Schwarztönen. Dieser Farbwechsel in den bestrahlten Flächen des Etiketts erzeugt scharfe, kontrastreiche Beschriftungen oder Kennzeichnungen.
Auf der anderen Seite ist aber der Schwellwert für diesen Vorgang so hoch, daß ein unbeabsichtigter Farbumschlag durch UV-Strahlung oder Temperatureinwirkung nicht auftritt.

Um einen gewünschten Text oder beliebige Zeichen auf das Material zu übertragen, können Galvanoablenksysteme oder auch Masken eingesetzt werden.

Nach der gemeinsamen Vulkanisation von Reifen und Etikett sind Diffusionsvorgänge von Weichmachern, Alterungsschutzmitteln oder Vernetzern aus dem Reifen in das beschriftete Etikett nicht auszuschließen. Diese Chemikalien verfärben das Etikett so stark, daß der Kontrast zwischen Schriftzeichen und Hintergrund zunehmend verblaßt, so daß die Beschriftung auf dem Etikett nur temporär lesbar ist.

Wenn eine dauerhafte Lesbarkeit des Etiketts erforderlich ist, kann das Etikett vor der Vulkanisation mit dem Reifen mit einer Sperrschicht ausgestattet werden. Fast vollständig wird die Diffusion verhindert, wenn das Etikett allseitig mit Ausnahme der beschrifteten Seite mit einer derartigen Sperrschicht ausgerüstet ist.

Diese Sperrschicht kann unter anderem aus Polyamid oder einer auf das Etikett aufgedampften Sperrschicht, bevorzugt eine Metallschicht wie zum Beispiel Aluminium, oder aus aufgedampften SiOₓ bestehen. Die Polyamidschicht kann sowohl durch die Beschichtung mit einer geeigneten flüssigen Rezeptur mit anschließender Trocknung und Härtung in vorzugsweise 1 bis 20 µm Dicke als auch durch Aufkaschieren einer Folie mit einer Dicke von vorzugsweise 5 bis 25 µm aufgebracht werden.

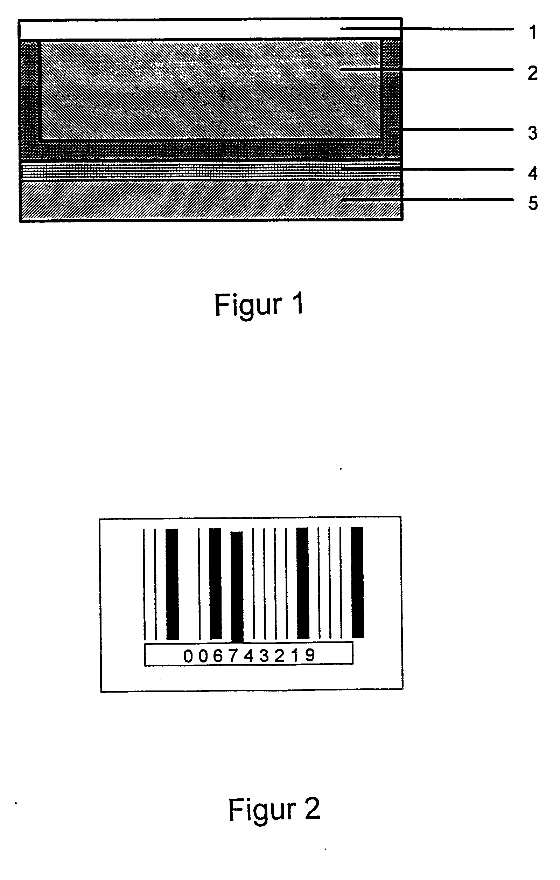

In der Figur 1 ist ein erfindungsgemäßes Etikett in seiner bevorzugten Ausführungsform dargestellt. Das Etikett weist eine Schutzabdeckung 1 aus beispielsweise Polyester auf. Die Trägerschicht 2 ist von einer Sperrschicht 3 weitgehend allseitig umgeben. Um das Verkleben des Etiketts mit beispielsweise dem Rohreifen sicherzustellen, ist eine selbstklebende Beschichtung 4 vorgesehen, die ihrerseits mit einer Trennfolie 5 abgedeckt ist.

Die Figur 2 zeigt eine Möglichkeit der Beschriftung mit einem Barcode und einer Klarschrift. Der Barcode ist maschinenlesbar.

Im folgenden soll die Erfindung anhand mehrerer Beispiele erläutert werden, ohne die Erfindung allerdings damit unnötig einschränken zu wollen.

### Beispiel 1

Die laserbeschriftbare Gummimischung setzt sich aus den folgenden Komponenten zusammen:

| | Gew.-% |
|---|---|
| Kautschukblend aus Naturkautschuk und SBR-Kautschuk im Verhältnis 2:1 | 60 |
| Kieselsäure | 25 |
| Paraffinische Weichmacher | 4 |
| Zinkoxid | 3,5 |
| Titandioxid | 3 |
| Vestodur FP LAS ® der Firma Hüls AG | 1 |
| Farbpigment Hostasingelb HR ® der Firma Hoechst AG | 0,3 |
| Alterungsschutzmittel, Beschleuniger, Schwefel, Vernetzer, Trennmittel, Inhibitor | insgesamt 3,2 |

Die Herstellung der laserbeschriftbaren Gummimischung erfolgt in zwei Stufen, nämlich der Vormischung und der Hauptmischung.

Zunächst werden die Rohstoffe auf einer Oberschalenwaage grammgenau für den Einsatz im Kneter in Transportbehältnisse aus Polyethylen abgewogen.

Für die Vormischung werden der bei 60 °C für 72 Stunden gelagerte Naturkautschuk und der SBR-Kautschuk in einem Kneter vom Typ Werner & Pfleiderer, der durch ineinandergreifende Wellen mit einer maximalen Geschwindigkeit von Vₘₐₓ=45 U/min gekennzeichnet ist, vorgelegt. Es erfolgt die Zugabe der abgewogenen Rohstoffe, der Kieselsäure, der paraffinischen Weichmacher, des Zinkoxids, des Titandioxids, des Vestodurs FP LAS ®, des Hostasingelb HR ®, des Alterungsschutzmittels, des Beschleunigers, des Schwefels, des Vernetzers, des Trennmittels und des Inhibitors.
Die Knetzeit beträgt 6 ½ Minuten bei einer Knettemperatur von 120 °C. Anschließend läuft die Mischung in den Auflaufturm, was innerhalb von 2 ½ Minuten geschieht.
Die Aufarbeitung mit dem Raffer erfolgt für 9 ½ Minuten bei einer Temperatur der Rafferwalze von 70 °C und einer maximalen Geschwindigkeit der Walze von Vₘₐₓ=55 U/min.

Nach der Abkühlphase wird die Vormischung den Kneterwalzen für die Hauptmischung erneut zugeführt.
Zunächst werden die Rohstoffe Aktivator, Beschleuniger und Vernetzer im Kneter zugegeben, wobei die Knetzeit 3 ½ Minuten bei einer Knettemperatur von 90 °C beträgt.
Anschließend erfolgt das Einlaufen der Hauptmischung in den Auflaufturm für insgesamt 2 ½ Minuten.
Das Aufarbeiten im Raffer nimmt 9 Minuten in Anspruch.

Daraufhin erfolgt der Kalandriervorgang der gekneteten Mischung in einem Kalander (Marke Werner & Pfleiderer, 3-Walzen-S-Kalander). Im Kalander wird die Mischung erneut aufgeknetet und durch in der Spaltbreite verstellbare Walzenpaare gepreßt, wobei die Spaltbreite derartig eingestellt ist, daß sich ein Kalanderfell in 1 mm Stärke ergibt. Das Fell wird zusammen mit einer mit einlaufenden Abdeckfolie aus Polyethylen in Stärke 50 µm auf eine Kernhülse gewickelt.
Für eine teilweise Vorvernetzung wird das Gummifell in einer ESH-Anlage mit 40 kGy bestrahlt.
Zur endgültigen Fertigung der Etiketten werden aus dem Fell Etiketten der Größe 40 x 70 mm ausgestanzt und auf Rollen dargereicht.

Abschließend erfolgt das Aufbringen der Sperrschicht, des Klebers und des Abdeckpapiers auf das Etikett. Zunächst wird das Etikett mit 5 g/m² mit einer ethanolischen Polyamidrezeptur beschichtet, die Klebebeschichtung aus einem dem Stand der Technik entsprechenden vulkanisierbaren Kautschukhaftkleber, der die temporäre Fixierung des Etiketts auf Gummiteilen verstärkt, aufgebracht und nach der Trocknung des Haftklebers das Trennpapier, ein einseitig silikonisiertes Natronkraftpapier, einkaschiert.

Die Beschriftung des Etiketts vor dem Vulkanisationsvorgang mit einem Barcode und einer Klarschrift erfolgt mit einem Nd-YAG-Festkörperlaser mit Galvanoablenksystem bei folgenden Beschriftungsparametern:

| | |
|---|---|
| Leistung | 30 Watt |
| QS-Frequenz | 12 kHz |
| Geschwindigkeit | 900 mm/s |
| Planfeldoptik mit f | 160 |

Beispielsweise kann hierfür der tesa-Label-Laser der Firma Beiersdorf AG gewählt werden.

Das derart hergestellte Etikett wird vor dem Vulkanisieren auf dem Reifenrohling aufgeklebt und durchläuft zusammen mit diesem die weiteren Prozeßschritte. Die scharfe, kontrastreiche Beschriftung des Etiketts erlaubt eine sichere, automatische Lesbarkeit zur Identifizierung des Reifens und Steuerung der Fertigung und Logistik.

### Beispiel 2

Die Zusammensetzung der Gummimischung der Etiketten sowie der Herstellungsvorgang bis einschließlich dem Ausstanzen der Etiketten aus dem Fell entsprechen denen aus Beispiel 1.

Nach dem Ausstanzen wird auf dem Etikett eine Sperrschicht durch Aufdampfen einer 100 nm dicken Aluminiumschicht ausgebildet.
Darauf wird als Kleber für die temporäre Fixierung des Etiketts auf Gummiteilen ein dem Stand der Technik entsprechender vulkanisierbarer Kautschukhaftkleber beschichtet. Als Schutz gegen Verschmutzung der Etikettenoberfläche wird eine 25 µm dicke PEN-Folie, die transparent ist, durch Aufkaschierung aufgebracht.

## Patentansprüche

1. Verwendung von Etiketten zur Kennzeichnung von Gummiteilen, insbesondere Reifen, bestehend aus
a) einer Trägerschicht aus einer laserbeschriftbaren mitvulkanisierbaren, hellen Gummimischung, die
b) ein Additiv enthält, das unter Laserbestrahlung einen Farbumschlag erzeugt.

2. Verwendung von Etiketten zur Kennzeichnung von Gummiteilen, insbesondere Reifen, nach Anspruch 1, dadurch gekennzeichnet, daß die Trägerschicht mit einer Schutzabdeckung, die im sichtbaren Bereich und nahen IR-Bereich transparent ist, abgedeckt ist.

3. Verwendung von Etiketten zur Kennzeichnung von Gummiteilen, insbesondere Reifen, nach Anspruch 1, dadurch gekennzeichnet, daß die Trägerschicht einseitig mit einer Selbstklebemasse beschichtet ist.

4. Verwendung von Etiketten zur Kennzeichnung von Gummiteilen, insbesondere Reifen, nach Anspruch 3, dadurch gekennzeichnet, daß die Selbstklebemasse mit einem Trennpapier oder einer Trennfolie abgedeckt ist.

5. Verwendung von Etiketten zur Kennzeichnung von Gummiteilen, insbesondere Reifen, nach Anspruch 1, dadurch gekennzeichnet, daß die Trägerschicht mit Ausnahme der zu beschriftenden Seite, bevorzugt allseitig, mit einer Sperrschicht versehen ist, bevorzugt aus Polyamid oder Polyvinylidenchlorid oder aus einer aufgedampften Sperrschicht, bevorzugt ein Metall, wie Aluminium, oder aus SiOₓ.

6. Verwendung von Etiketten zur Kennzeichnung von Gummiteilen, insbesondere Reifen, nach Anspruch 1, dadurch gekennzeichnet, daß die Gummimischung ein Blend aus Naturkautschuk und/oder Synthesekautschuken wie SBR-, Butyl- oder EPDM Kautschuk ist.

7. Verwendung von Etiketten zur Kennzeichnung von Gummiteilen, insbesondere Reifen, nach Anspruch 1, dadurch gekennzeichnet, daß die Gummimischung mit einem oder mehreren Zusatzstoffen wie Alterungsschutzmitteln, Vernetzern, Lichtschutzmitteln, Ozonschutzmitteln, Zinkoxid, Fettsäuren, Harzen, Weichmachern und Beschleunigern abgemischt ist.

8. Verwendung von Etiketten zur Kennzeichnung von Gummiteilen, insbesondere Reifen, nach Anspruch 1, dadurch gekennzeichnet, daß das Additiv ein Pigment, insbesondere Kupfer(II)hydroxidphosphat (Cu₃(PO₄)₂ x Cu(OH)₂; Libethenit) oder ein gecoatetes Perlglanzpigment wie Iriodin ® ist.

9. Verwendung von Etiketten zur Kennzeichnung von Gummiteilen, insbesondere Reifen, nach Anspruch 1, dadurch gekennzeichnet, daß das Additiv in Mengen von 0,1 bis 10 Gew.-%, insbesondere 0,5 bis 5 Gew.-% eingesetzt wird.

10. Verwendung von Etiketten zur Kennzeichnung von Gummiteilen, insbesondere Reifen, nach Anspruch 1, dadurch gekennzeichnet, daß zur Formstabilisierung der Etiketten diese durch UV-Strahlung, Elektronenstrahlhärtung, auf thermischem oder chemischem Wege vorvernetzt werden und/oder ein Gewebe in diesen vorgesehen ist.

11. Verwendung von Etiketten zur Kennzeichnung von Gummiteilen, insbesondere Reifen, nach Anspruch 1, dadurch gekennzeichnet, daß die Trägerschicht mit einer Selbstklebemasse beschichtet ist, die von einer vulkanisierbaren Kautschukklebemasse gebildet ist.

12. Verwendung von Etiketten zur Kennzeichnung von Gummiteilen, insbesondere Reifen, nach Anspruch 1, dadurch gekennzeichnet, daß die Trägerschicht mit einer Schutzabdeckung aus Polyester, Polyamid, perfluorierten Polymeren, Polyolefinen oder Polyimid abgedeckt ist.

## Claims

1. Use of labels for labelling rubber parts, in particular tyres, comprising
a) a base layer comprising a laser-inscribable, co-vulcanizable, pale rubber blend which
b) contains an additive which produces a colour change on laser irradiation.

2. Use of labels for labelling rubber parts, in particular tyres, according to Claim 1, characterized in that the base layer is covered by a protective covering which is transparent in the visible region and in the near IR region.

3. Use of labels for labelling rubber parts, in particular tyres, according to Claim 1, characterized in that the base layer is coated on one side with a self-adhesive composition.

4. Use of labels for labelling rubber parts, in particular tyres, according to Claim 3, characterized in that the self-adhesive composition is covered by a release paper or a release film.

5. Use of labels for labelling rubber parts, in particular tyres, according to Claim 1, characterized in that the base layer is provided, preferably on all sides with the exception of the side to be inscribed, with a barrier layer, preferably comprising polyamide or polyvinylidene chloride or a vapour-deposited barrier layer, preferably a metal, such as aluminium, or SiOₓ.

6. Use of labels for labelling rubber parts, in particular tyres, according to Claim 1, characterized in that the rubber mixture is a blend of natural rubber and/or synthetic rubbers, such as SBR, butyl or EPDM rubber.

7. Use of labels for labelling rubber parts, in particular tyres, according to Claim 1, characterized in that the rubber mixture is blended with one or more additives, such as antiageing agents, crosslinking agents, light stabilizers, ozone stabilizers, zinc oxide, fatty acids, resins, plasticizers and accelerators.

8. Use of labels for labelling rubber parts, in particular tyres, according to Claim 1, characterized in that the additive is a pigment, in particular copper (II) hydroxide phosphate (Cu₃(PO₄)₂ × Cu(OH)₂; libethenite) or a coated pearlescent pigment, such as Iriodin®.

9. Use of labels for labelling rubber parts, in particular tyres, according to Claim 1, characterized in that the additive is employed in amounts of from 0.1 to 10% by weight, in particular from 0.5 to 5% by weight.

10. Use of labels for labelling rubber parts, in particular tyres, according to Claim 1, characterized in that, for dimensional stabilization, the labels are precrosslinked by UV radiation, electron beam curing or by thermal or chemical means and/or a fabric is provided therein.

11. Use of labels for labelling rubber parts, in particular tyres, according to Claim 1, characterized in that the base layer is coated with a self-adhesive composition, which is made of a vulcanizable rubber adhesive composition.

12. Use of labels for labelling rubber parts, in particular tyres, according to Claim 1, characterized in that the base layer is covered by a protective covering comprising polyester, polyamide, polyfluorinated polymers, polyolefins or polyimide.

## Revendications

1. Utilisation d'étiquettes pour identifier des pièces de caoutchoucs, en particulier des bandages pneumatiques, constituées :
a) d'une couche de support constituée d'un mélange de caoutchouc clair conjointement vulcanisable, marquable au laser, qui
b) contient un additif qui produit, lors de l'exposition à un laser, un changement de couleur.

2. Utilisation d'étiquettes pour identifier des pièces de caoutchouc, en particulier des bandages pneumatiques, selon la revendication 1, caractérisée en ce que la couche de support est revêtue d'une couche de protection, qui est transparente dans la plage visible et dans la plage des IR proches.

3. Utilisation d'étiquettes pour identifier des pièces de caoutchouc, en particulier des bandages pneumatiques, selon la revendication 1, caractérisée en ce que la couche de support est revêtue sur une face d'une masse autocollante.

4. Utilisation d'étiquettes pour identifier des pièces de caoutchouc, en particulier des bandages pneumatiques, selon la revendication 3, caractérisée en ce que la masse autocollante est revêtue de papier de séparation ou d'une feuille de séparation.

5. Utilisation d'étiquettes pour identifier des pièces de caoutchouc, en particulier des bandages pneumatiques, selon la revendication 1, caractérisée en ce que la couche de support est pourvue, à l'exception de la face à marquer, de préférence de tous côtés, d'une couche barrière qui est constituée de préférence d'un polyamide ou de poly(chlorure de vinylidène), ou d'une couche barrière vaporisée, de préférence un métal, comme l'aluminium, ou de SiOₓ.

6. Utilisation d'étiquettes pour identifier des pièces de caoutchouc, en particulier des bandages pneumatiques, selon la revendication 1, caractérisée en ce que le mélange de caoutchoucs est un mélange de caoutchouc naturel et/ou de caoutchouc de synthèse, comme le caoutchouc SBR, le caoutchouc butyle ou le caoutchouc EPDM.

7. Utilisation d'étiquettes pour identifier des pièces de caoutchouc, en particulier des bandages pneumatiques, selon la revendication 1, caractérisée en ce que le mélange de caoutchoucs est mélangé à un ou plusieurs additifs, tels que des agents de protection contre le vieillissement, des agents de réticulation, des agents photoprotecteurs, des agents de protection de la couche d'ozone, de l'oxyde de zinc, des acides gras, des résines, des plastifiants et des accélérateurs.

8. Utilisation d'étiquettes pour identifier des pièces de caoutchouc, en particulier des bandages pneumatiques, selon la revendication 1, caractérisée en ce que l'additif est un pigment, en particulier de l'hydroxyde phosphate de cuivre (II) (Cu₃(PO₄)₂ x Cu(OH)₂; Libethenit) ou un pigment à brillant perlé revêtu tel que l'lriodin®.

9. Utilisation d'étiquettes pour identifier des pièces de caoutchouc, en particulier des bandages pneumatiques, selon la revendication 1, caractérisée en ce que l'additif est utilisé en quantités de 0,1 à 10% en poids, en particulier de 0,5 à 5% en poids.

10. Utilisation d'étiquettes pour identifier des pièces de caoutchouc, en particulier des bandages pneumatiques, selon la revendication 1, caractérisée en ce que, pour assurer la stabilité de forme des étiquettes, celles-ci sont préréticulées par un rayonnement U.V., un durcissement par un rayonnement électronique, par voie thermique ou chimique, et/ou contiennent une toile.

11. Utilisation d'étiquettes pour identifier des pièces de caoutchouc, en particulier des bandages pneumatiques, selon la revendication 1, caractérisée en ce que la couche de support est revêtue d'une masse autocollante, qui est formée d'une masse collante de caoutchouc vulcanisable.

12. Utilisation d'étiquettes pour identifier des pièces de caoutchouc, en particulier des bandages pneumatiques, selon la revendication 1, caractérisée en ce que la couche de support est revêtue d'une couche de protection en polyester, en polyamide, en polymères fluorés, en polyoélfines ou en polyimide.
